# EUROPÄISCHE PATENTSCHRIFT

(11) **EP 0 571 658 B1**
(45) Veröffentlichungstag und Bekanntmachung des Hinweises auf die Patenterteilung: **04.06.1997**
(21) Anmeldenummer: 92117297.9
(22) Anmeldetag: 09.10.1992
(51) Int. Cl.: B65G 1/133, B65G 17/48

(54) **Lagersystem mit drehbaren Lagergestellen**
Storage system with rotating storage locations
Système de stockage avec emplacements de stockage tournants

(30) Priorität: 29.05.1992 US 889811
(43) Veröffentlichungstag der Anmeldung: 01.12.1993
(73) Patentinhaber: Constructor Lagertechnik GmbH, 51688 Wipperfürth (DE)
(72) Erfinder: Voelz, Dale, St. Charles, Illinois 60175 (US)
(74) Vertreter: Herrmann-Trentepohl, Werner, Dipl.-Ing.

(56) Entgegenhaltungen:
- FR-A- 1 198 598
- US-A- 5 065 872
- PATENT ABSTRACTS OF JAPAN vol. 9, no. 60 (M-364)(1783) 16. M rz 1985

## Beschreibung

Die Erfindung bezieht sich allgemein auf Lager- und Zuführsysteme, und insbesondere auf ein neues und verbessertes Lager system, welches den Zugang zu beiden Seiten einer Lagereinheit ermöglicht, die sich in einer Zugriffsstellung befindet.

Derartige Lager- und Zuführfördersysteme sind bereits bekannt. Bei einem typischen bekannten System ist eine Vielzahl von Lagereinheiten, wie beispielsweise Gestellen oder Behältern vorgesehen, die an einem ovalen, angetriebenen Förderer befestigt sind. Derartige Förderer sind im allgemeinen mit einer ovalen Schiene versehen, welche gerade Seiten und halbkreisförmige Enden aufweist. In der Regel ist der Zugang bzw. Zugriff zu den Lagereinheiten an einem der kreisförmigen Enden vorgesehen. Weiterhin ist es üblich, vertikal positionierte, mehrfach unterteilte Lagergestelle vorzusehen, so daß ein Zugang zu den einzelnen Abteilen in jeder eingestellten Position des Förderers besteht.

Weiterhin ist es bekannt, wie in der US-A-5 065 872 beschrieben, das Fördersystem so aufzubauen, daß der Zugang zu zwei separaten Lagereinheiten in einer einzelnen Schaltstellung des Förderers vorgesehen ist. Ein solches System macht es erforderlich, daß die Bedienungsperson eine Zone oder einen Bereich zwischen den beiden zugänglichen Lagereinheiten betritt. In Systemen dieses Patentes stellt jede Lagereinheit oder jedes Gestell erste und zweite gegenüberliegende Zugriffsfronten zur Verfügung. Ein erster Lagerbereich ist von einer Zugriffsfront zugänglich, während ein zweiter Lagerbereich von der gegenüberliegenden Zugriffsfront her zugänglich ist. Obwohl zwei separate Lagerbereiche in jeder Schaltstellung des Förderers zugänglich sind, befindet sich einer der Lagerbereiche innerhalb einer Lagereinheit, während der andere der Lagerbereiche in der benachbarten Lagereinheit angeordnet ist. Bei einem solchen System muß der Förderer in zwei unterschiedliche separate Stellungen geschaltet werden, um den Zugriff zu beiden Seiten einer einzelnen Lagereinheit zu ermöglichen.

Aus der FR-A-1 198 598 ist ein gattungs gemäßes Lager system bekannt, bei dem eine Vielzahl von Lagereinheiten in mehreren Transporteinheiten zusammengefaßt sind. Die Transporteinheiten sind über eine Schienenführung von einer Lagerzone zu einem Zugriffsbereich bewegbar. In dem Zugriffsbereich kann jede Transporteinheit in nicht näher erläuterter Weise gedreht werden, um von zwei gegenüberliegenden Seiten Zugang zu den einzelnen Lagereinheiten zu erhalten.

Es ist daher Aufgabe der Erfindung, ein Lagersystem zu schaffen, bei dem jeder Transporter in einem Zugriffsbereich in effektiver Weise automatisch gedreht werden kann.

Diese Aufgabe wird durch ein Lagersystem nach dem Anspruch 1 gelöst.

Die Erfindung bietet eine Vielzahl von wichtigen Aspekten und Vorteilen. Die Erfindung stellt ein Lager- und Zuführsystem zur Verfügung, an dem eine Vielzahl von Lagereinheiten an einer Halterung befestigt sind, um zwischen einer Lagerzone und einer Zugriffszone bewegt zu werden. Jede der Lagereinheiten ist derart befestigt, daß sie in der Art eines drehbaren Tabletts gedreht werden kann, während sie in der Zugriffsstellung bleibt.

Wenn die Halterung in eine bestimmte vorgegebene Schaltstellung bewegt wird, wird eine vorgegebene Lagereinheit in die Zugriffsstellung gebracht. Während diese Lagereinheit in der Zugriffsstellung verbleibt, kann sie gedreht werden, um wenigstens zwei verschiedene Seiten zugänglich zu machen.

In den dargestellten Ausführungsformen ist jede Lagereinheit mit zwei gegenüberliegenden Seiten versehen. Ein erster Lagerbereich ist von einer ersten Seite her zugänglich, während ein anderer separater Lagerbereich von der anderen Seite her zugänglich ist. Weiterhin sind in den dargestellten Ausführungsbeispielen die Lagereinheiten so angeordnet, daß diese beiden Seiten entsprechenden, gleichen Zugriffsseiten der nächsten benachbarten Lagereinheit gegenüberliegen, wenn sich die Einheiten in der Lagerzone befinden.

Beim Erreichen der Zugriffsstellung kann die Lagereinheit um 90° in entgegengesetzte Richtungen in sogenannte Betriebsstellungen gedreht werden, um die eine oder die andere Zugriffsseite in Richtung auf die Bedienungsperson in der Zugriffsstellung zu präsentieren. Mit einem Lagerfördersystem nach der vorliegenden Erfindung kann der vollständige Zugriff auf jede Zugriffsfront einer Lagereinheit erfolgen, während der Förderer in einer seiner eingestellten Stellung bleibt.

Gemäß weiteren Aspekten dieser Erfindung wird das System vollständig sowohl bezüglich der einzelnen Schaltstellungen des Förderers als auch bezüglich der Drehung der Lagereinheit in der Zugriffsstellung angetrieben. Weiterhin sind Rückkopplungs- bzw. Rückmeldungssensoren vorgesehen, so daß das System vollständig automatisiert werden kann.

Häufig produziert ein Hersteller beispielsweise eine große Anzahl von unterschiedlichen Typen, Farben und Größen eines Artikels. Mit solchen Artikeln kann das Fördersystem nach der vorliegenden Erfindung beschickt werden, wobei eine vorgegebene Stilrichtung, Farbe und Größe in einem vorgegebenen Gestell oder innerhalb eines vorgegebenen Behälters angeordnet wird.

Wenn Aufträge empfangen werden, durch die eine bestimmte Anzahl von Artikeln, eine Anzahl von verschiedenen Stilen, Farben und Größen angefordert werden, wird dieser Auftrag in eine Computersteuerung eingegeben, welche den Vorratsförderer steuert. Der Förderer arbeitet dann unter der Computersteuerung, welche den Förderer schaltet um die Lagereinheiten, welche die gewünschten Artikel enthalten, in die Zugriffsstellung zu bewegen. Die Lagereinheit wird dann automatisch gedreht, um die gewünschte Seite der Lagereinheit zum Zugriff in Richtung auf die Person, welche den Auftrag erfüllen soll, positioniert. In einer weiteren bevorzugten Ausführungsform ist ein Lichtpfosten oder dergleichen Anzeigeeinrichtung vorgesehen, welche derjenigen Person, die den Auftrag zusammenstellt, die Anzahl der Artikel in einem vorgegebenen Behälter anzeigt, die zur Ausführung des jeweiligen Auftrags gefordert werden.

Diese und weitere Aspekte der vorliegenden Erfindung sind in der beigefügten Zeichnung dargestellt und werden im einzelnen in der folgenden Beschreibung näher erläutert.

Es zeigen:
- Fig. 1: eine schematische perspektivische Ansicht eines Karussellförderers nach der vorliegenden Erfindung mit einer Lagereinheit in der Zugriffsstellung, nachdem sie um 90° in eine Betriebsstellung gedreht worden ist, in welcher eine ihrer Seiten benachbart den Bedienungspersonen ist,
- Fig. 1A: eine teilweise perspektivische Ansicht ähnlich Fig. 1, wobei jedoch die Lagereinheit sich in ihrer normalen Ausrichtung in der Zugriffsstellung befindet, in welcher sie ankommt und bevor sie gedreht wird,
- Fig. 2: eine vergrößerte, teilweise perspektivische Ansicht einer Dreheinrichtung, die einzeln die Lagereinheiten in der Zugriffsstellung in die jeweilige Betriebsstellung dreht, um jeweils eine der beiden Seiten zum Zugriff zu positionieren,
- Fig. 3: eine teilweise Draufsicht auf die Dreheinrichtung aus Fig. 2 und weiterhin in Phantomdarstellung den unteren Bereich der Lagereinheit, die von der Dreheinrichtung gedreht wird,
- Fig. 3A: eine teilweise Draufsicht ähnlich Fig. 3, wobei jedoch der untere Bereich der Lagereinheit mit durchgezogenen Linien dargestellt ist,
- Fig. 4: eine teilweise Seitenansicht entlang der Linie 4 - 4 aus Fig. 3, wobei verschiedene Teile der Klarheit wegen weggelassen wurden,
- Fig. 5: eine teilweise perspektivische Ansicht einer gestellartigen, Lagereinheit insbesondere geeignet zur Lagerung und Zuführung von kleinen Kleidungsstücken, wie Büstenhaltern, und
- Fig. 6: eine vergrößerter Schnittansicht einer Halterung für derartige kleine Kleidungsstücke an einem Rahmensystem aus Fig. 5.

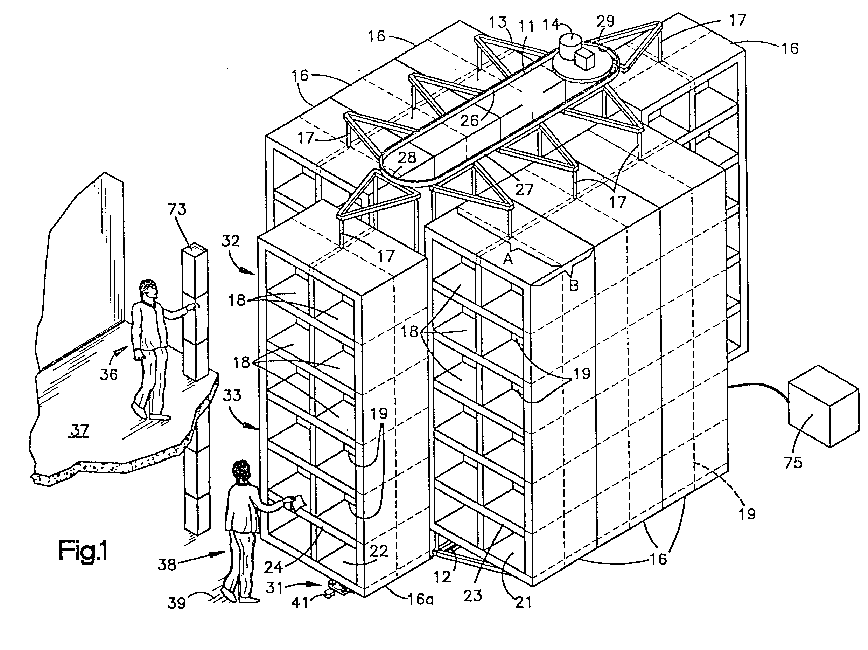

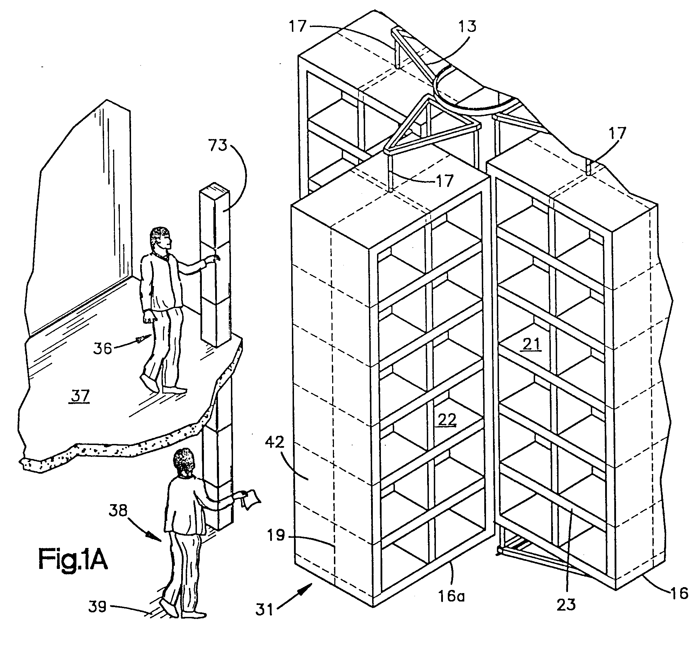

Fig. 1 zeigt schematisch den Gesamtaufbau eines karussellartigen Lager- und Zuführsystems nach der vorliegenden Erfindung. Die Maschine weist einen stationären Rahmen mit jeweils oberen und unteren ovalen Laufbahnen bzw. -schienen 11, 12 auf. Auf diesen Schienen zur Bewegung entlang des Ovals ist ein Transporter 13 oder eine Trageinrichtung, die in der geschlossenen Schleife fährt, angeordnet. Ein motorisierter Antrieb 14, der an dem Rahmen befestigt ist, bewirkt, daß die Trageinrichtung 13 sich entlang den Schienen zu jeder einzelnen von einer Vielzahl von Schaltstellungen bewegen kann.

An der Trageinrichtung 13 sind eine Vielzahl von behälterartigen Lagereinheiten 16 befestigt. Jede dieser Lagereinheiten 16 ist gelenkig bzw. drehbar an einem benachbarten Bereich der Trageinrichtung 13 an einer vertikalen Drehwelle 17 gehalten. Diese Drehwelle 17 erstreckt sich vertikal und zentral bzw. mittig durch die verschiedenen Behälter 18 der zusammengehörigen Lagereinheit 16.

Im Ausführungsbeispiel, das in Fig. 1 gezeigt ist, weist jeder der Behälter 18 eine zentrale Wandung 19 auf, welche den Lagerbehälter in eine erste Lagerzone 21 auf einer Seite der zentralen Wandung 19 und eine zweite Lagerzone 22 auf der gegenüberliegenden Seite der zentralen Wandung 19 tritt. Die Lagerzone 21 ist über eine erste Seite 23 des zusammengehörenden Behälters zugänglich und die zweite Lagerzone 22 ist durch eine zweite oder gegenüberliegende Seite des zusammengehörenden Behälters zugänglich.

Vorzugsweise sind die Lagereinheiten 16 derart befestigt, daß, wenn die Lagereinheiten sich entlang der geraden Seiten des Ovals erstrecken, sich die erste Seite 23 einer jeden Lagereinheit sich im wesentlichen benachbart zur zweiten Seite 24 der benachbarten Lagereinheit befindet. Weiterhin bietet es sich an, die Lagereinheiten so zu dimensionieren, daß sie eine radiale Länge A haben, die größer ist als ihre Tiefe B. Wenn derartige Abmessungen verwendet werden, ist das Lagervolumen des gesamten Systems für einen vorgegebenen Betrag an Bodenfläche größer als es sein würde, wenn die Länge verkleinert würde.

Die Karussellschiene weist zwei gerade Seiten 26 und 27 auf, die an ihren Enden über halbkreisförmige Endbereiche 28 und 29 verbunden sind. Ein Zugangsbereich 31 befindet sich in einer Flucht mit dem halbkreisförmigen Endbereich 28. In dieser Zugriffsstellung kann die Lagereinheit 16 beladen werden oder gelagerte Artikel können von dieser entnommen werden. Im dargestellten Ausführungsbeispiel der Fig. 1 ist ein relativ großes Karussell gezeigt mit Lagerbehältern, die in oberen und unteren Sektoren 32 und 33 angeordnet sind. Eine erste Bedienungsperson 36, die auf einer Plattform 37 steht, kann bequem die Behälter in dem oberen Sektor 32 erreichen, während eine zweite Bedienungsperson 38 auf einer unteren Plattform oder dem Boden 39 leicht Zugriff zu den Behältern im unteren Bereich 33 hat. Mit dem dargestellten Aufbau können Karusselle mit einer wesentlichen oder großen Höhe gebaut werden, um so die vollständig verfügbare Höhe eines Gebäudes, in welchem sich die Karusselleinheit befindet, auszunutzen.

In Fig. 1 sind die geraden Seiten 26 und 27 relativ kurz, so daß die gesamte Einheit auf einer einzelnen Seite der Zeichnung gezeigt werden kann. In der Praxis ist das Karussell allerdings gewöhnlich sehr viel länger, so daß eine Vielzahl von Lagereinheiten 16 verwendet werden können.

Am Zugriffsbereich 31 befindet sich eine Lagereinheit-Dreheinrichtung 41, die betrieben wird, um eine Lagereinheit 16a, die dem Zugriffsbereich 31 zugeführt worden ist, durch den Betrieb des Motorantriebs 14 zu koppeln. Wenn jede der Lagereinheiten 16a zunächst die Zugriffsstellung erreicht, befindet sich diese Lagereinheit in einer normalen Ausrichtung, die in Fig. 1A gezeigt ist, in welcher ihre Länge sich radial von den Schienen aus erstreckt und die Enden 42 der Behälter 18 sind benachbart den zwei Bedienungspersonen 36 und 38. Nach Erreichen der Zugriffspositionen wird die Lagereinheit 16a um 90° in die eine oder in die andere Richtung gedreht, um eine der beiden Seiten 23 oder 24 innerhalb einer kurzen Entfernung zu den Bedienungspersonen 36 und 38 zu positionieren, wie dies in Fig. 1 dargestellt ist.

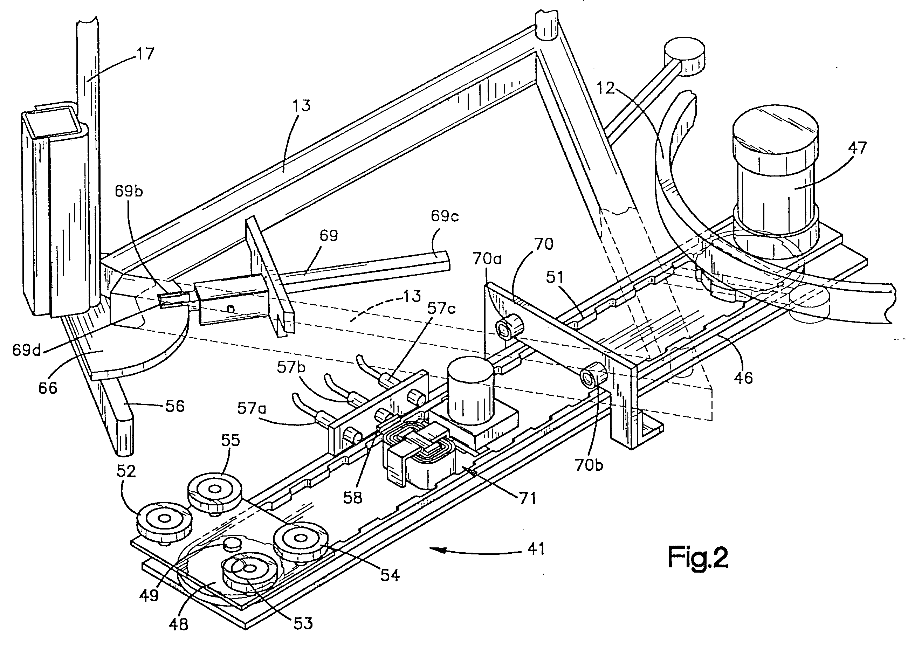

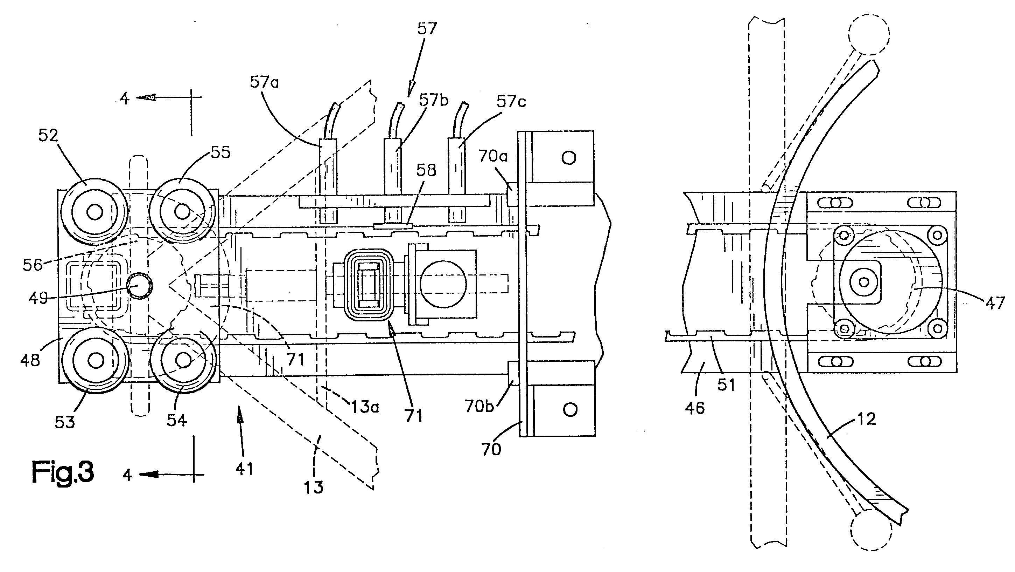

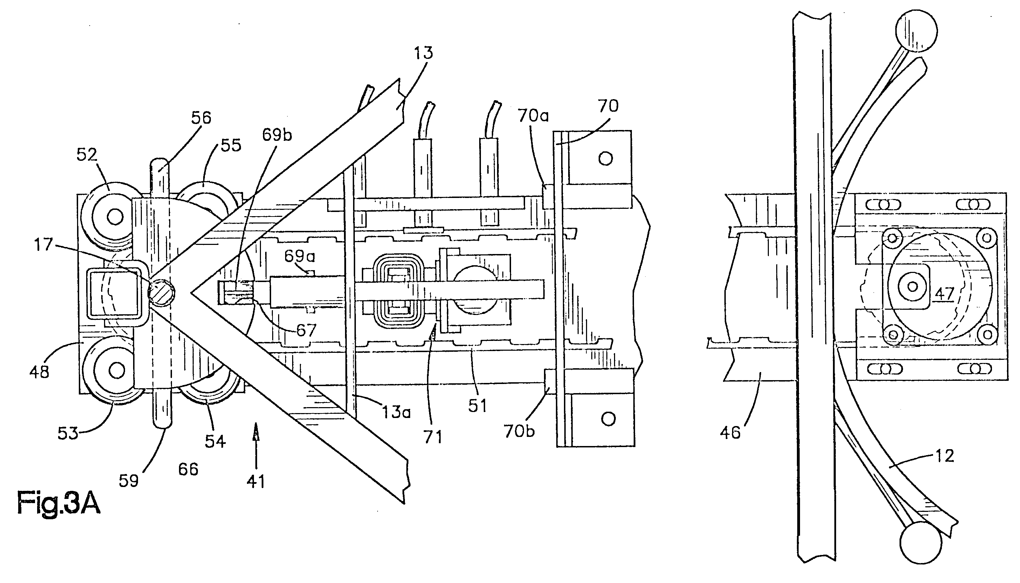

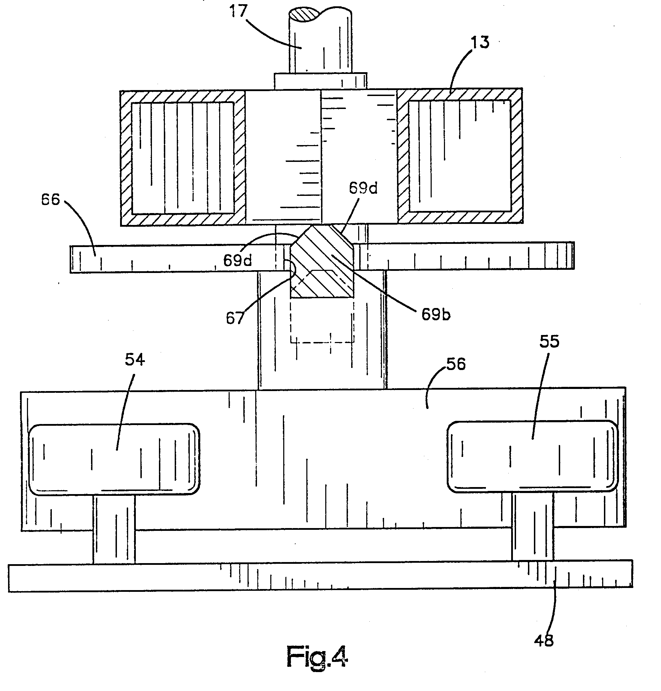

Im folgenden wird auf die Figuren 2 bis 4 Bezug genommen, die den Aufbau der Dreheinrichtung 41 zeigen. Die Dreheinheit 41 ist mit einer Grundplatte 46 versehen, welche einen elektrischen Motor 47 innerhalb des benachbarten Bereichs der unteren Schiene 12 trägt. An dem Ende der Grundplatte 46, gegenüberliegend des Motors 47, ist ein Drehtisch 48 angeordnet, der drehbar auf der Grundplatte zur Rotation um eine vertikale Achse auf einem Drehbolzen 49 montiert ist. Ein Antriebsgurt 21 verbindet den Motor 47 mit dem Drehtisch 48, so daß der Motor betrieben werden kann, um den Drehtisch in die jeweilige Position um 90° von der normalen Position des Drehtisches, die in den Fig. 2, 3 und 3A gezeigt ist, zu drehen.

An dem Drehtisch befestigt sind vier Rollen 52, 53, 54 und 55. Die Rollen 52 und 55 sind voneinander beabstandet und ein gleicher Abstand ist zwischen den Rollen 53 und 54 vorgesehen. Dieser Abstand ist derart bemessen, um es einer Schaufel oder einem Blatt 56, das an dem unteren Ende der verbindenden Drehwelle 17 montiert ist, zu ermöglichen, in eine Stellung zwischen den Rollen gebracht zu werden. Die Rollen 52 und 53 sind auf der äußeren Seite des Blattes 56 angeordnet, während die Rollen 54 und 55 auf der gegenüberliegenden oder inneren Seite des Blattes 56 angeordnet sind. Die Rollen wirken als gegenüberliegende Anschläge oder Widerlager, die eine Kopplung oder Verbindung mit dem Blatt 56 bilden.

Die verschiedenen Proportionen sind derart gewählt, daß, wenn eine bestimmte Lagereinheit zu dem Zugangsbereich 31 durch Betrieb des Motorantriebs 14 bewegt wird, sich das Blatt 56, das an dem unteren Ende der assoziierten Drehwelle 17 befestigt ist, sich in eine Stellung zwischen den oben genannten Rollen bewegt. Das Blatt und die Rollen stellen daher eine Kopplung zur Verfügung, so daß eine Drehung des Drehtisches 48 durch den Motor 47 zu einer Drehbewegung der gesamten Lagereinheit 16A in eine Richtung führt, die durch die Drehrichtung des Motors 47 bestimmt wird. Im dargestellten Ausführungsbeispiel erstreckt sich die Drehbewegung der Lagereinheiten über einen Winkel von 90° in jeder Richtung von der normalen Ausrichtung der Lagereinheiten, die in den Figuren 1A, 2, 3 und 3A gezeigt ist.

Eine Meßeinrichtung 57 ist benachbart dem Gurt 51 angeordnet und weist drei Sensoren 57a, 57b und 57c auf. Diese Sensoren erzeugen ein Signal, wenn eine Sensorplatte 58, die an dem Gurt befestigt ist, sich an den Sensoren entlang bewegt. Wenn die Platte 58 am Sensor 57b angeordnet ist, wird ein Signal erzeugt, um anzuzeigen, daß der Drehtisch und die dazugehörige Lagereinheit sich in ihrer normalen Ausrichtung zum Betrieb der Trageinrichtung 13 befindet. Wenn die Platte am Sensor 57c angeordnet ist, wird ein Signal erzeugt, um anzuzeigen, daß sich der Drehtisch und die dazugehörige Lagereinheit 16 im Uhrzeigersinn bzw. rechtsdrehend um 90° gedreht haben, um die zweite Seite 24 der Lagereinheit 16a in eine Stellung zu bringen, wo die Seite 24 für die beiden Bedienungspersonen 36 und 38 leicht zugänglich ist. Wenn die Platte 58 vor dem Sensor 57a angeordnet ist, wird ein Signal erzeugt, welches anzeigt, daß die Lagereinheit 16a sich in Gegenuhrzeigerrichtung bzw. linksdrehend um 90° von ihrer normalen Ausrichtung gedreht hat, um so die erste Seite 23 einer solchen Lagereinheit zum Zugriff durch die Bedienungspersonen 36 und 38 anzuordnen.

Ein Verriegelungssystem ist dafür vorgesehen, um jede der Lagereinheiten 16 in ihrer normalen Ausrichtung zum Lagern und zum Schaltbetrieb zu verriegeln. Dieses Verriegelungssystem, daß normalerweise eine Drehbewegung der verschiedenen Lagereinheiten 16 verhindert, wird freigegeben (außer Betrieb gesetzt), wenn sich die entsprechende Lagereinheit in der Zugriffsstellung befindet und durch die Dreheinheit gedreht werden muß, wie dies oben beschrieben worden ist.

Gemäß den Figuren 2 bis 4 befindet sich eine Verriegelungsplatte 46 auf dem unteren Ende der Drehwelle 17. Die Drehwelle ist auf einem benachbarten Bereich der Trageinrichtung 13 gelagert. Die Verriegelungsplatte ist mit einem sich radial erstreckenden Schlitz 67 versehen. Ein Verriegelungshebel 69 ist bei 69a an einem Halteträger 13a (dreh)gelenkig gelagert. Das äußere Ende 69b sitzt normalerweise in dem Schlitz 67 und verhindert eine Bewegung der Platte 66 aus ihrer normalen Ausrichtung heraus. Andererseits stellt dies sicher, daß sich die Drehwelle 17 und die dazugehörige Lagereinheit in einer ordentlichen Position zum Rundschalten und Lagern befinden.

An der Dreheinrichtung 41 ist eine lineare Betätigungseinrichtung 71 befestigt, die unterhalb des inneren Endes des Verriegelungshebels 69 angeordnet ist, wenn die entsprechende Lagereinheit in die Zugriffsstellung 31 bewegt wird. Das innere Ende 69c des Verriegelungshebels 69 ist größer und schwerer als das äußere Ende 69b. Daher hält die Schwerkraft normalerweise das äußere Ende 69b in der Verriegelungsstellung innerhalb des Schlitzes 67. Wenn der Verriegelungshebel 69 freigegeben werden muß, um eine Drehbewegung der Lagereinheit in die Zugriffsstellung zu erlauben, wird die Betätigungseinrichtung 71 betrieben, um das innere Ende 69c anzuheben, so daß das äußere Ende 69b nach unten aus dem Schlitz 67 herausgedreht bzw. -bewegt wird. Wenn die dazugehörige Lagereinheit gedreht wird, gleitet das äußere Ende entlang der unteren Seite der Platte, selbst wenn die Betätigungseinrichtung deaktiviert wird.

Wenn die Dreheinrichtung die Lagereinheit von der Zugriffsstellung in ihre normale Ausrichtung zurückführt, ist die Betätigungseinrichtung 71 deaktiviert und die Schwerkraft bringt das äußere Ende dazu, sich nach oben hin in die Verriegelungsposition zu bewegen. Das äußere Ende 69b ist mit Schrägen 69d versehen, um eine derartige Bewegung zu erleichtern. Die Lagereinheit wird dann wieder in ihrer normalen Ausrichtung verriegelt. In diesem Moment ist die Blattstellung gerade ausgerichtet, so daß der Hauptantrieb 14 das Karussell weiterdrehen kann, um eine andere Lagereinheit zur Zugriffsstellung zu führen.

Ein zweites Meßsystem ist zudem vorgesehen, wenn eine bestimmte, besondere Lagereinheit sich in der Zugriffsstellung befindet. Dieses Meßsystem 70 weist Sensorzellen 70a auf, die Aufdrucke lesen, die auf eine Platte 13a aufgedruckt sind, welche wiederum an der Trageinrichtung 13 unterhalb jeder der entsprechenden Lagereinheiten 16 montiert ist. Die Signale, die von diesem Meßsystem erzeugt werden, werden normalerweise einer Steuereinrichtung 75 zugeführt, welche den Betrieb des Systems automatisiert. Vorzugsweise ist ein Lichtmast oder -pol oder dergliechen Anzeigeeinrichtung 73 vorgesehen, wenn der Karussellbetrieb vollständig automatisiert ist. Ein solcher Lichtmast ist mit einem Steuercomputer 75 verbunden, und zeigt den jeweiligen Bedienungspersonen 36 und 38 die Behälter an, von denen Artikel entnommen werden sollen, sowie die Nummern dieser Artikel, die entnommen werden sollen. Dies erleichtert erheblich das Ausführen der Aufträge und vermeidet die Notwendigkeit der Verwendung von Bestellzetteln für die Bedienungspersonen.

Obwohl das dargestellte Drehsystem auf der unteren Ebene bzw. dem Boden angeordnet ist, kann es ebenso am oberen Ende der Lagereinheiten angeordnet sein.

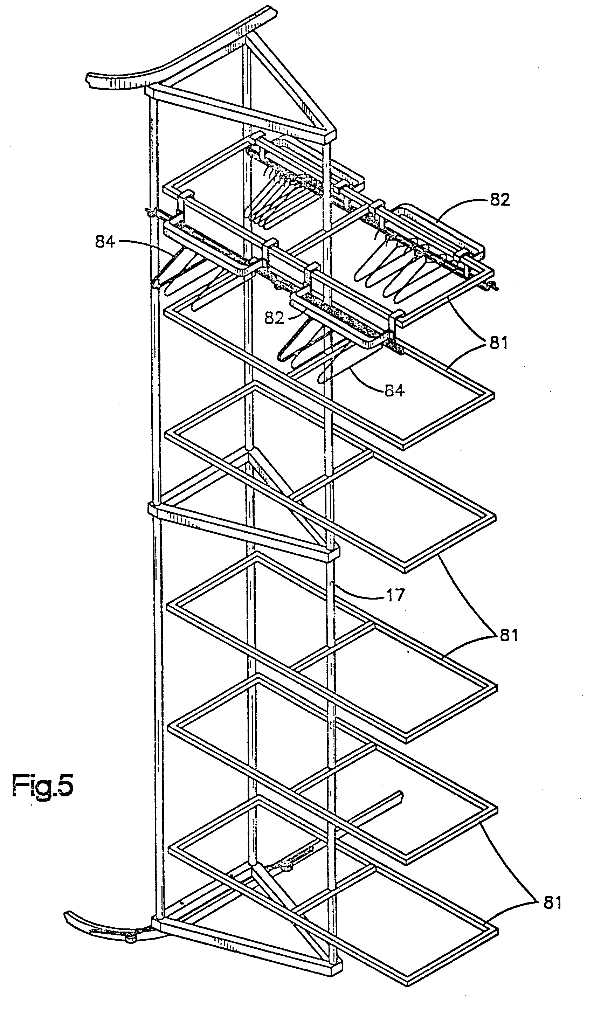

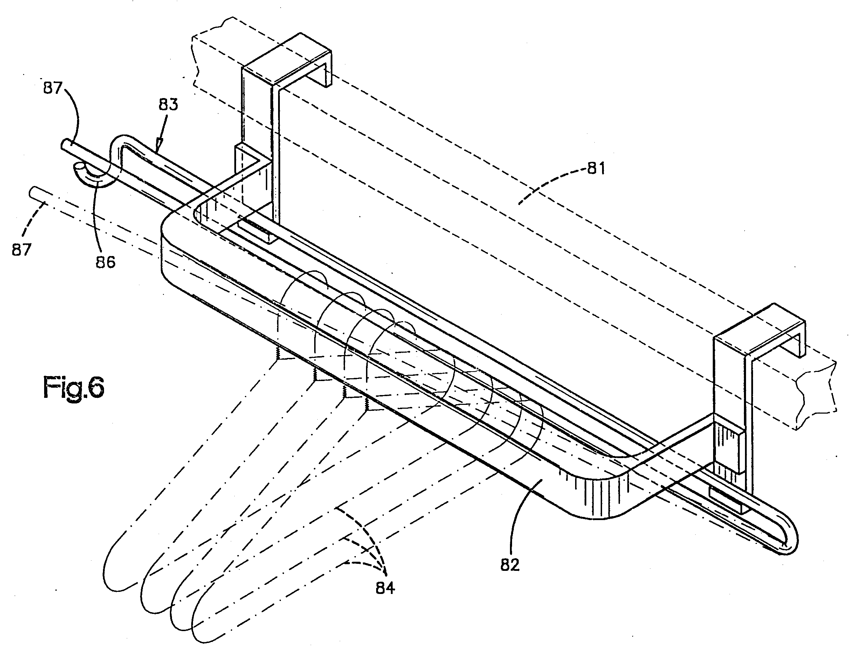

Die Figuren 5 und 6 zeigen eine andere Form der Lagereinheiten, die zur Lagerung und zur Zugänglichmachung von kleinen Kleidungsstücken verwendet werden kann. In dieser Ausführungsform sind offene Rahmen bzw. Gestelle 81, die vertikal voneinander beabstandet sind, auf einer Drehwelle 17 angeordnet und wieder in die Zugriffsstellung um 90° in jede Richtung aus ihrer normalen Lagerrichtung heraus drehbar. Die einzelnen individuellen Teile sind vorzugsweise an Hängeeinrichtungen 82 gehalten, die wiederum an den offenen Rahmen 81 angeordnet sind und von diesen entfernt werden können. Jede Hängeeinheit 82 ist mit einem Griff versehen, so daß die Bedienungspersonen die Hängeeinheit von dem offenen Rahmen entfernen oder diese ersetzen kann.

Weiterhin stellt jede Aufhängeeinrichtung einen U-förmigen Stabhalter zur Verfügung, an dem einzelne Bügel aufgehängt werden können. Der Stabhalter 83 weist ein hakenförmiges Ende 86 auf, das derart ausgebildet ist, um das gegenüberliegende Ende 87 des Stabhalters aufzunehmen, um ein geschlossenes Haltesystem zu bilden und zu verhindern, daß die Hänger zufällig von dem Stabhalter gleiten. Wenn die Bedienungsperson Hänger 84 und Artikel daraus von dem Stabhalter entnehmen muß, wird das Ende 87 aus dem hakenförmigen Ende 86 entnommen, so daß es möglich ist, dieses nach unten, in die gestrichelte Position zu bewegen, so daß die gewünschte Anzahl von Bügeln 84 entnommen werden kann. In dieser Ausführungsform, wie in der ersten Ausführungsform, sind die Lagereinheiten mit dem offenen Rahmen zur Drehbewegung angeordnet, um den Zugang zu gegenüberliegenden Seiten der Lagereinheit in exakt der gleichen Weise wie in der ersten Ausführungsform zu ermöglichen.

Sobald sich das Karussell bewegt, um eine gewünschte Lagereinheit in die Zugriffsstellung 31 zu führen bzw. zu schalten, dreht die Dreheinheit 41 diese Lagereinheit über einen Winkel von 90° entweder im Uhrzeigersinn oder im Gegenuhrzeigersinn, um so die eine oder die andere Seite 23 oder 24 nach vorn hin anzuordnen, so daß die Bedienungsperson bequem Zugriff auf die jeweilige Seite hat. Die Dreheinrichtung 41 sowie der Motorantrieb 14 sind vorzugsweise computergesteuert für einen im wesentlichen vollautomatischen Betrieb durch einen Computer, der schematisch mit 75 angedeutet ist und der mit den verschiedenen Sensoren und Antriebseinheiten, die oben beschrieben wurden, verbunden ist.

Angenommen sei eine Situation, in der jede Lagerzone 21 oder 22 eines jeden Behälters 18 mit einer Anzahl einer bestimmten Kategorie von Artikeln gefüllt ist; z.B. wenn das Karussell zur Lagerung von und zum Zugriff auf kleine Kleidungsstücke verwendet wird, wobei jeder Behälter mit einer Anzahl solcher Teile einer Farbe, eines Stils oder einer Größe beladen ist, und andere Behälter mit Artikeln eines anderen Stils, anderer Größen und anderer Farben gefüllt sind. Weiterhin kann mehr als ein Typ eines Artikel in dem Gesamtkarussellsystem gelagert werden.

Wenn nun eine Anforderung für eine bestimmte Anzahl von Artikeln jeweils verschiedener Farben, Stilrichtungen und Größen eingeht, wird diese Anforderung vorzugsweise dem Steuercomputer 75 zugeführt der ebenso Informationen darüber enthält, welche besonderen Behälter die jeweiligen Stilrichtungen, Farben und Größen von Artikeln haben. Der Computer gibt dann einen Befehl an den Motorantrieb, eine bestimmte behälterartige Lagereinheit 16 in die Zugriffsstellung 31 zu bewegen. Anschließend steuert der gleiche Computer die Dreheinrichtung, die die gewünschte Seite der Behälter der Lagereinheit 16 in die Zugriffsstellung gegenüberliegend den Bedienungspersonen 36 und 39 bringt. Vorzugsweise zeigt der Lichtpfeiler 73, der benachbart den beiden Bedienungspersonen 36 und 38 angeordnet ist und auch durch den Computer gesteuert ist, die Anzahl der Teile oder Artikel an, die von den bestimmten Behältern, welche sich dann benachbart den Bedienungspersonen befinden, entnommen werden sollen, um so die jeweilige Anforderung bzw. den jeweiligen Befehl auszuführen.

Nachdem die erforderliche Anzahl und Typen von Artikeln von den jetzt zugänglichen Behältern über die beiden Bedienungspersonen entnommen worden ist, dreht die Maschine die Lagereinheit entweder in die Zugriffsstellung 31, um die gegenüberliegende Seite zur weiteren Auftragserfüllung zu präsentieren oder dreht den Behälter zurück in die Lagerrichtung, so daß die Trageinrichtung weitergedreht werden kann, um die nächste gewünschte Lagereinheit in die Zugriffsstellung zu bringen. Das Verriegelungssystem hält die Lagereinheiten in der entsprechenden Lagerrichtung, mit Ausnahme, wenn diese in die Zugriffsstellung gedreht werden.

## Patentansprüche

1. Lagersystem mit einer Vielzahl von Lagereinheiten (16), wobei jede Lagereinheit (16) von zwei einander gegenüberliegenden Seiten her zugänglich ist, mit einem Transporter (13), der die Lagereinheiten (16) über eine Schienenführung von einer Lagerzone zu einem Zugriffsbereich (31) bewegt, wobei der Transporter (13) jeweils eine Lagereinheit (16) im Zugriffsbereich so hält, daß eine Drehbewegung in diesem Zugriffsbereich (31) möglich ist, **dadurch gekennzeichnet**, daß in dem Zugriffsbereich (31) eine Dreheinrichtung (41) mit Rollen (52-55) vorgesehen ist, daß an jeder Lagereinheit (16) eine Drehwelle (17) angeordnet ist die ein Blatt (56) aufweist, das mit den Rollen (52-55) in Eingriff gebracht werden kann, und eine Steuereinrichtung vorgesehen ist, über die die Rollen (52-55) der Dreheinrichtung (41) mit dem Blatt (56) der der Drehwelle (17) und der jeweils zugeordneten Lagereinheit (16) drehbar sind, und eine Verriegelungseinrichtung die Lagereinheiten über den Transporter (13) gegen eine Drehung verriegelt, und daß über die Verriegelungseinrichtung eine in dem Zugriffsbereich (31) befindliche Lagereinheit (16) entriegel bar ist, um eine Drehung dieser Lagereinheit (16) in eine Zugriffposition zu ermöglichen.

2. Lagersystem nach Anspruch 1, **dadurch gekennezeichnet**, daß die Lagereinheiten (16) über den Transporter (13) in einer festen Position relativ zu der Schienenführung gehalten sind und im Zugriffsbereich (31) eine Drehung der Lagereinheiten (16) um 90° vorgesehen ist.

3. Lagersystem nach Anspruch 1 oder 2, **dadurch gekennzeichnet**, daß Sensoren vorgesehen sind, die ein erstes Signal erzeugen, wenn eine bestimmte Lagereinheit im Zugriffsbereich ist und ein zweites Signal erzeugen, das die Drehstellung der Lagereinheit (16) im Zugriffsbereich anzeigt und daß über die Steuereinrichtung eine bestimmte Lagereinheit automatisch in den Zugriffsbereich (31), und in die Zugriffsposition bringen kann.

4. Lagersystem nach einem der vorhergehenden Ansprüche, **dadurch gekennzeichnet**, daß eine Anzeigeeinrichtung benachbart dem Zugriffsbereich (31), vorgesehen ist, die von der Steuereinrichtung gesteuert wird und den jeweiligen Ort der aus der Lagereinheit zu entnehmenden Artikel anzeigt.

5. Lagersystem nach einem der vorhergehenden Ansprüche, **dadurch gekennzeichnet**, daß die Lagereinheiten (16) als offene Gestelle oder Rahmen ausgebildet sind, an denen Artikel aufgehängt werden können.

6. Lagersystem nach einem der vorhergehenden Ansprüche, **dadurch gekennzeichnet**, daß eine Lagereinheit Behälter zur Lagerung von Artikeln aufweist.

7. Lagersystem nach einem der vorhergehenden Ansprüche, **dadurch gekennzeichnet**, daß die Lagereinheiten (16) derart hoch sind, daß eine Betriebsperson Hilfsmittel benötigt, um sämtliche Lagereinheiten (16) bedienen zu können.

## Claims

1. Storage system with a plurality of storage units (16), each storage unit (16) being accessible from two opposing sides, including a transporter (13), which moves the storage units (16) via a guide track from a storage zone to an access region (31), the transporter holding one storage unit (16) at a time in the access region so that rotational movement is possible in this access region (31), characterised in that provided in the access region (31) is a rotating device (41) with rollers (52, 55), that arranged on each storage unit (16) there is a rotary shaft (17), which has a blade (56), which can be brought into engagement with the rollers (52-55), and a control device is provided by means of which the rollers (52-55) of the rotating device (41) are rotatable with the blade (56) on the rotary shaft (17) and the associated storage unit and a locking device locks the storage units via the transporter (13) against rotation and that a storage unit (16) situated in the access region (31) is unlockable by means of the locking device in order to make rotation of this storage unit (16) into an access position possible.

2. Storage system as claimed in Claim 1, characterised in that the storage units (16) are held by means of the transporter (13) in a fixed position relative to the guide track and a rotation of the storage units (16) through 90° is provided in the access region (31).

3. Storage system as claimed in Claim 1 or 2, characterised in that sensors are provided which produce a first signal when a predetermined storage unit is in the access region and produce a second signal which indicates the rotational position of the storage unit (16) in the access region and that a predetermined storage unit can be moved automatically by means of the control device into the access region (31) and the access position.

4. Storage system as claimed in one of the preceding claims, characterised in that provided adjacent to the access region (31) there is an indicating device which is controlled by the control device and indicates the current location of the article to be removed from the storage unit.

5. Storage system as claimed in one of the preceding claims, characterised in that the storage units (16) are constructed as open racks or frames on which articles can be suspended.

6. Storage system as claimed in one of the preceding claims, characterised in that a storage unit has containers for storing articles.

7. Storage system as claimed in one of the preceding claims, characterised in that the storage units (16) are so high that an operative requires an appliance in order to be able to reach all the storage units (16).

## Revendications

1. Système de stockage comprenant un grand nombre d'unités de stockage (16), chaque unité de stockage (16) étant accessible à partir de deux côtés mutuellement opposés, avec un transporteur (13) qui déplace les unités de stockage (16), au moyen d'un guidage par glissières, d'une zone de stockage à une zone d'accès (31), le transporteur (13) maintenant une unité de stockage (16) considérée, dans la zone d'accès, de manière qu'un mouvement de rotation soit possible dans cette zone d'accès (31), caractérisé en ce qu'un dispositif de rotation (41), pourvu de galets (52-55), est prévu dans la zone d'accès (31) ; en ce qu'un arbre tournant (17), implanté sur chaque unité de stockage (16), présente une pale (56) pouvant être mise en prise avec les galets (52-55), et il est prévu un dispositif de commande par l'intermédiaire duquel les galets (52-55) du dispositif de rotation (41) peuvent tourner avec la pale (56) de l'arbre tournant (17) et avec l'unité de stockage (16) respectivement associée, et un dispositif de verrouillage verrouille les unités de stockage par l'intermédiaire du transporteur (13), d'une manière interdisant une rotation ; et en ce qu'une unité de stockage (16) située dans la zone d'accès (31) peut être déverrouillée, par l'intermédiaire du dispositif de verrouillage, pour permettre une rotation de cette unité de stockage (16) jusqu'à une position d'accès.

2. Système de stockage selon la revendication 1, caractérisé en ce que les unités de stockage (16) sont retenues, par l'intermédiaire du transporteur (13), dans une position fixe par rapport au guidage par glissières, une rotation de 90° des unités de stockage (16) étant prévue dans la zone d'accès (31).

3. Système de stockage selon la revendication 1 ou 2, caractérisé par la présence de capteurs qui engendrent un premier signal lorsqu'une unité de stockage déterminée se trouve dans la zone d'accès, et engendrent un second signal indiquant la position que l'unité de stockage (16) a prise, par rotation, dans la zone d'accès ; et en ce qu'une unité de stockage déterminée peut être amenée automatiquement, par l'intermédiaire du dispositif de commande, à la zone d'accès (31) et à la position d'accès.

4. Système de stockage selon l'une quelconque des revendications précédentes, caractérisé en ce qu'un dispositif d'affichage, prévu au voisinage de la zone d'accès (31), est commandé par le dispositif de commande et affiche l'emplacement considéré des articles devant être prélevés de l'unité de stockage.

5. Système de stockage selon l'une quelconque des revendications précédentes, caractérisé en ce que les unités de stockage (16) sont réalisées sous la forme de châssis ou de cadres ouverts, auxquels des articles peuvent être suspendus.

6. Système de stockage selon l'une quelconque des revendications précédentes, caractérisé en ce qu'une unité de stockage présente des réceptacles pour le stockage d'articles.

7. Système de stockage selon l'une quelconque des revendications précédentes, caractérisé en ce que les unités de stockage (16) sont d'une hauteur telle qu'un opérateur nécessite des moyens auxiliaires pour pouvoir manier l'ensemble des unités de stockage (16).
